# EUROPEAN PATENT APPLICATION

(11) **EP 4 691 947 A1**
(43) Date of publication of application: **11.02.2026**
(21) Application number: 24778026.5
(22) Date of filing: 26.03.2024
(51) Int. Cl.: B65G 1/04, B65G 1/137

(54) **STORAGE SHELF FIXING RAIL CONVEYING DEVICE AND CONVEYING SYSTEM**

(30) Priority: 27.03.2023 CN 202310325699
(71) Applicant: Libiao Robotics Holdings Pte. Ltd., 608521 Singapore (SG)
(72) Inventor: ZHU, Jianqiang, Hangzhou, Zhejiang 311199 (CN)
(74) Representative: Signori, Ludovico
(86) International application number: PCT/CN2024/083887
(87) International publication number: WO 2024/199238

(57) **Abstract**

A storage shelf fixing rail conveying device and a conveying system thereof, the device comprising: a transverse rail (11), a first stand column (12), a first movable component (13), and a connecting mechanism of a task module (14). The transverse rail (11) is fixed on a shelf (10); the first stand column (12) is vertically arranged on the transverse rail (11) and can transversely slide; the first movable component (13) is arranged on the first stand column (12) and can slide along the first stand column (12); the connecting mechanism of the task module (14) is provided on the first movable component (13); the task module (14) is driven by the first movable component (13) to access cargo box and/or cargo, and puts the cargo box and/or the cargo into a connecting component of a freight robot (17) running on bottom of the shelf (16) or takes out the cargo box and/or the cargo from the connecting component. By means of using the storage shelf fixing rail conveying device and the conveying system thereof, storage space utilization rate, entering and exiting speed, and sorting efficiency of cargo in existing warehousing systems can be greatly improved.

## Description

### CROSS-REFERENCE TO RELATED APPLICATION

The present invention claims the priority to the Chinese patent application with the filing No. 2023103256998 filed with the Chinese Patent Office on March 27, 2023, and entitled "FIXED RAIL CONVEYING DEVICE AND CONVEYING SYSTEM FOR WAREHOUSING RACK", the contents of which are incorporated herein by reference in entirety.

### TECHNICAL FIELD

The present invention relates to the technical field of rapid sorting, in particular to a storage shelf fixing rail conveying device and a conveying system (i.e., a fixed rail conveying device and a conveying system for a warehousing rack).

### BACKGROUND ART

Warehousing is the most costly part of the logistics. The existing warehousing systems need to build warehousing bases or warehousing centers. In a warehouse environment, storing or taking out the bins/goods is accomplished by a warehousing freight robot.

It is well known that in a large-scale warehousing center, the warehousing freight robot needs to move to the location of bins/goods according to the order, drag the goods from the rack and move the goods to the designated location with forklift arms. To perform this action, a distance of at least two freight forklift arms between the racks is required in the warehousing system, which is extremely wasteful from the perspective of saving warehousing space.

In order to improve the walking speed and further strengthen the walking stability of the freight robot, the relatively high smoothness of the ground where the warehousing freight robot is located is generally required in the warehouse environment, so the higher cost requirement and maintenance requirement are put forward for the manufacturing of the warehousing ground.

More importantly, for the existing process from warehouse to sorting, goods are required to be moved out from warehousing racks by a warehousing freight robot, and the warehousing freight robot conveys the goods to a sorting platform or a sorting system. However, in this traditional form of warehousing, conveying, and exchange, the occupied area is large, the conveying efficiency is limited by the warehousing freight robot, and the involvement of specialized sorting systems is required, resulting in extremely high time and configuration costs.

Consequently, the existing warehousing and conveying systems suffer from the technical problems of reduced efficiency in warehousing in and out, insufficient space utilization and high ground costs.

### SUMMARY

A fixed rail conveying device and the system thereof for warehousing rack are provided in the example of the present invention, which greatly improve the utilization of warehousing space, the speed of goods in and out, and the sorting efficiency of the existing warehousing system.

A fixed rail conveying device for warehousing rack includes:
a transverse rail, a first upright, a first movable member and a connecting mechanism of the task module.

The transverse rail is fixed on the rack.

The first upright is vertically arranged on the transverse rail and can slide transversely.

The first movable member is arranged on the first upright and can slide along the first upright.

The first movable member is provided with a connecting mechanism of the task module.

The task module is driven by the first movable member to store or take out the bins and/or goods, and place the bins and/or goods into the docking assembly of the freight robot running at the bottom of the rack, or take the bins and/or goods out from the docking assembly.

Optionally, the conveying device further includes a second upright and a second movable member, wherein the second upright is vertically arranged on the transverse rail and can slide transversely.

The second movable member is arranged on the upright and can slide along the second upright.

The second movable member is provided with a connecting mechanism of the task module.

The task module is arranged between the first upright and the second upright through the connecting mechanism.

The first movable member and the second movable member drive the task module to locate to a goods position or a docking position on the warehousing rack.

Optionally, the conveying device further includes a freight robot, which is a ground freight robot running on the ground at the bottom layer of the warehousing rack.

Optionally, when the task module is a bin pushing-pulling module (autonomous binhandling robot), the connecting mechanism of the task module is realized specifically by: the connecting mechanism of the task module is provided with an assembly for fixing the bin pushing-pulling module and a conveying assembly for the bin pushing-pulling module sliding on the supporting structure.

Optionally, the supporting structure is a loading rack.

Optionally, the conveying assembly is a conveying belt.

Optionally, the conveying belt is driven by a conveyor motor.

Optionally, a synchronous pulley, which is driven by a motor and can be controlled by a reducer, drives a synchronous belt to support the first movable member to move on the slide rail of the first upright; and
a synchronous pulley, which is driven by a motor and can be controlled by a reducer, drives a synchronous belt to support the second movable member to move on the slide rail of the second upright.

Optionally, the conveying device further includes another transverse rail, which is fixed at the lower part of the warehousing rack.

Two transverse rails can be connected with the first upright and the second upright through sliders.

The slider moves on the transverse rails driven by a roller, and the roller is driven by a motor.

Optionally, the ground freight robot performs path planning under the control of the server, or performs autonomous path planning, and the ground freight robot is provided with a planar moving assembly and a docking assembly that supports pushing and pulling of bins.

Optionally, the conveying device further includes: removing the bottom partition plate of the warehousing rack to provide a matching height, thereby supporting the ground freight robot to run on the ground and perform the docking action. Optionally, the freight robot is an AGV trolley.

Optionally, the freight robot is an autonomous mobile robot.

Optionally, the connecting structures between the transverse rail and the first upright and between the transverse rail and the second upright can be realized by driving the slider to move on the transverse rail by rollers.

A fixed rail conveying system for warehousing rack includes:
one fixed rail conveying device for warehousing rack as described above.

A fixed rail conveying system for warehousing rack includes:
multiple fixed rail conveying devices for warehousing rack as described above.

A fixed rail conveying device and the system thereof for warehousing rack are provided in the example of the present invention, wherein a transverse rail is arranged on the warehousing rack for the upright to move, and a movable member is arranged on the upright to drive a task module to perform actions such as identifying and storing or taking out bins. The device fundamentally solves the problem of waste of warehousing space in the existing warehousing system, and avoids the need for freight robots or sorting robots to maintain ultra-high counterweights or excessive requirements on the warehousing ground, so as to perform actions such as warehousing transfer or warehousing sorting. More importantly, the task module can be driven by the movable member to store or take out the bins and/or goods, to place the bins and/or goods into the docking assembly of the freight robot running at the bottom of the rack, or to take the bins and/or goods out from the docking assembly. The bins/goods in the warehouse can be cooperated with the freight robot or the sorting robot, so as to make it possible for the goods warehousing, the transfer of bins/goods and the sorting of bins/goods to be accomplished in the warehousing space. It can greatly improve the utilization of warehousing space, the speed of goods in and out, and the sorting efficiency of the existing warehousing system.

### BRIEF DESCRIPTION OF THE DRAWINGS

The drawings described herein are used to provide a further understanding of the present invention and constitute a part of the present invention, and the illustrative examples of the present invention and the description thereof are used to explain the present invention, and do not constitute an improper limitation on the present invention. In the drawings:
FIG. 1 is a schematic structural diagram of a fixed rail conveying device for warehousing rack provided by the example of the present invention.
FIG. 2 is a schematic structural diagram of a fixed rail conveying device for warehousing rack provided by the example of the present invention.
FIG. 3 is a schematic structural diagram of a fixed rail conveying device for warehousing rack provided by the example of the present invention.
FIG. 4 is a schematic structural diagram of a fixed rail conveying device for warehousing rack provided by the example of the present invention.
FIG. 5 is a schematic layout structure diagram of a fixed rail conveying device for warehousing rack provided by the example of the present invention.
FIG. 6 is a schematic structural diagram of a fixed rail conveying system for warehousing rack provided by the example of the present invention.

### DETAILED DESCRIPTION OF EMBODIMENTS

In order to make the purpose, technical solutions and advantages of the examples of the present invention more clear, the technical solutions in the examples of the present invention will be described clearly and completely below. Obviously, the described example is a part of the examples of the present invention, but not the whole examples. The components of the embodiments of the present invention, which are generally described and illustrated in the drawings herein, can be arranged and designed in various configurations.

Therefore, the following detailed description of the examples of the present invention provided in the drawings is not intended to limit the scope of the claims in the present invention but only represents selected examples of the present invention. Based on the examples in the present invention, all other examples obtained by those skilled in the art without inventive work belong to the protection scope of the present invention.

It should be noted that similar symbols and letters indicate similar items in the following drawings, so once an item is defined in one drawing, it does not need to be further defined and explained in subsequent drawings.

In the description of the present invention, it should be noted that if the terms "center", "upper", "lower", "left", "right", "vertical", "horizontal", "inside" and "outside" and the like appear, they indicate orientations or positional relationships based on those shown in the accompanying drawings, or the orientations or positional relationship that the product of the present invention is usually placed in use. They are intended only for the purpose of facilitating the description of the present invention and to simplify the description and are not indicative of, or suggestive of, that the referred device or components must have a particular orientation, be constructed and operated with a particular orientation, and therefore are not to be understood as limitations of the present invention.

Furthermore, if the terms such as "first", "second" and "third" appear, they are configured to distinguish descriptions only and are not to be understood as indicating or implying relative importance.

In addition, if the terms such as "horizontal", "vertical" and "overhanging" appear, they do not mean that the parts are required to be absolutely horizontal or overhanging, but may be slightly inclined. For example, "horizontal" only means that its direction is more horizontal than "vertical" and does not mean that the structure must be perfectly horizontal, but may be slightly inclined.

In the description of the present invention, it should also be noted that unless otherwise specified and limited, if the terms "provide", "mount", "joint" and "connect" appear, they should be broadly understood, for example, they can be fixed connection, detachable connection, or integrated connection; it can be a mechanical connection or an electrical connection; it can be directly connected, or be indirectly connected through an intermediate medium, further can be connected inside two elements. For those skilled in the art, the specific meanings of the above terms in the present invention can be understood in specific circumstances.

It should be noted that, in the case of no conflict, the features in the examples of the present invention can be combined with each other.

A fixed rail conveying device and the system thereof for warehousing rack are provided in the example of the present invention, which greatly improve the utilization of warehousing space and the efficiency of warehousing in and out of the existing warehousing system.

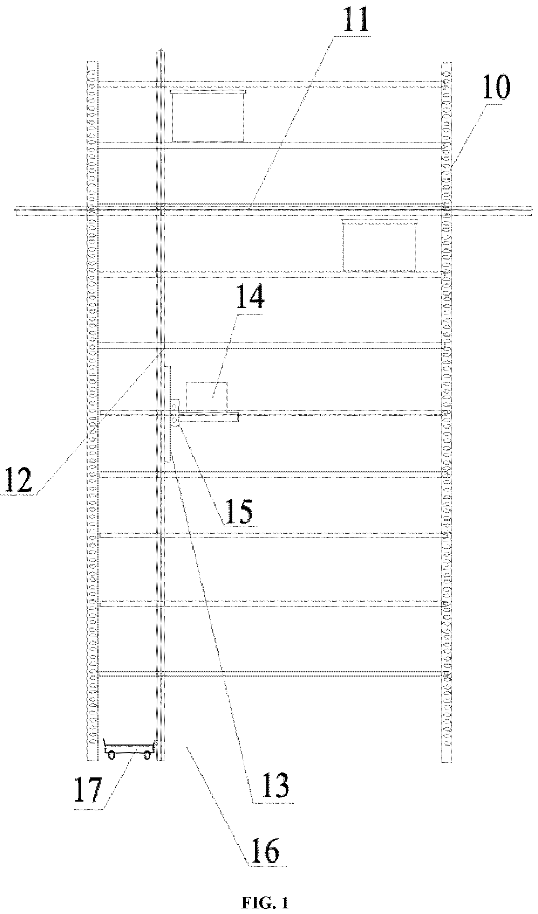

Referring to FIG. 1, a fixed rail conveying device for warehousing rack is shown, including:
a transverse rail 11, a first upright 12, a first movable member 13 and a connecting mechanism of the task module 14, wherein
the transverse rail 11 is fixed on a rack 10.

It should be noted that the transverse rail 11 is fixed on the beam or upright of the rack 10. When the length of the rack beam is relatively long, the fixing for the transverse rail needs the help of the beam and upright of the single rack, and the transverse rail needs to extend to the beam of the adjacent rack.

The first upright 12 is vertically arranged on the transverse rail 11 and can slide transversely.

The upright 12 slides in the transverse direction of the transverse rail, so that the first movable member 13 can be located in each column of the warehousing rack.

The first movable member 13 is arranged on the first upright 12 and can slide along the first upright 12.

Through the above arrangement, the first movable member 13 can move transversely and longitudinally, so that the first movable member 13 can be located at each tier of the rack.

The first movable member 13 is provided with a connecting mechanism 15 of the task module 14.

The task module 14 is driven by the first movable member 13 to store or take out the bins and/or goods, and place the bins and/or goods into the docking assembly of the freight robot 17 running at the bottom 16 of the warehousing rack.

Through the arrangement, when the actions of sorting and/or storing or taking out goods are completed by the task module, the bins and/or goods can be picked up by the freight robot 17, and the goods can be transferred, sorted and delivered to the destination goods position or sorting position, or to the transportation position after sorting.

The task module 14 can be an assembly with one or more tasks, such as recognizing, extracting, putting back, grasping, etc. The task module 14 is driven by the first movable member 13 to locate at the slot of the rack, and at the same time, the connecting mechanism of the task module is the basic structure that enables the connection to be realized with different task modules.

When the task module is a bin pushing-pulling module, it includes:
a supporting structure of the bin pushing-pulling module, such as a loading rack;
   and
a conveying assembly of the bin pushing-pulling module, such as a conveying belt, in which the conveying belt needs to be driven by a conveyor motor.

Moreover, in the case of other task modules, the connecting member is set according to the specific function of the task module, which is not limited herein.

Through the above example, a transverse rail is arranged on the warehousing rack for the upright to move, and a movable member is arranged on the upright to drive a task module to perform actions such as identifying and storing or taking out bins. The device fundamentally solves the problem of waste of warehousing space in the existing warehousing system, and avoids the need for freight robots or sorting robots to maintain ultra-high counterweights or excessive requirements on the warehousing ground to perform actions such as warehousing transfer or warehousing sorting.

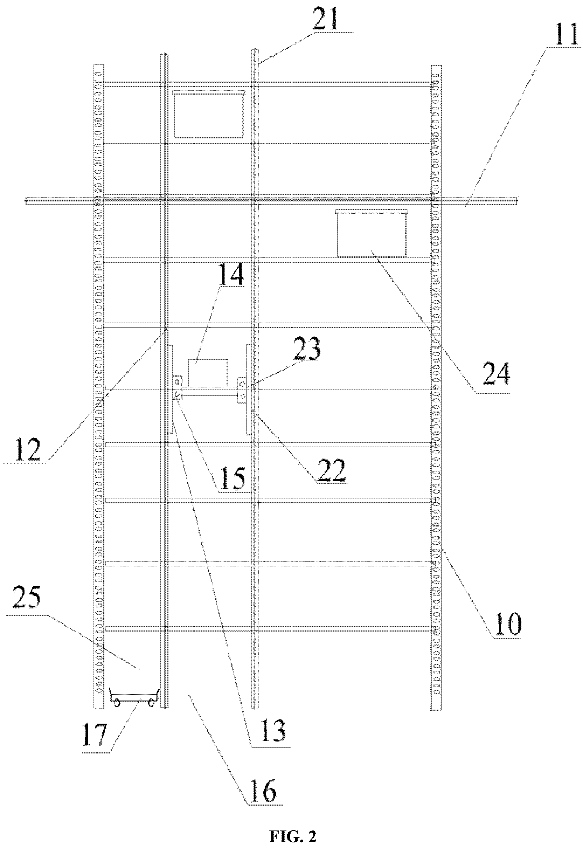

Referring to FIG. 2, a fixed rail conveying device for warehousing rack is shown.

On the basis of the illustration and explanation of FIG. 1, the conveying device further includes a second upright 21 and a second movable member 22, wherein the second upright 21 is vertically arranged on the transverse rail 11 and can slide transversely.

The second movable member 22 is arranged on the second upright 21 and can slide along the second upright 21.

The second movable member 22 is provided with a connecting mechanism 23 of the task module 14.

The task module 14 is arranged between the first upright 12 and the second upright 21 through the connecting mechanism 23.

The first movable member 12 and the second movable member 21 drive the task module 14 to locate to a goods position 24 or a docking position 25 on the warehousing rack 10.

The docking position 25 is the position that the freight robot completes the delivery of the goods from the task module 14 after storing or taking out the bins and/or goods from the goods position of the rack by the task module 14.

The bottom partition plate of the warehousing rack is removed to provide a matching height, thereby supporting the ground freight robot to run on the ground and perform the docking action, and the bottom partition plates between the adjacent uprights of the warehousing rack are removed to form the docking position 25 for the ground freight robot.

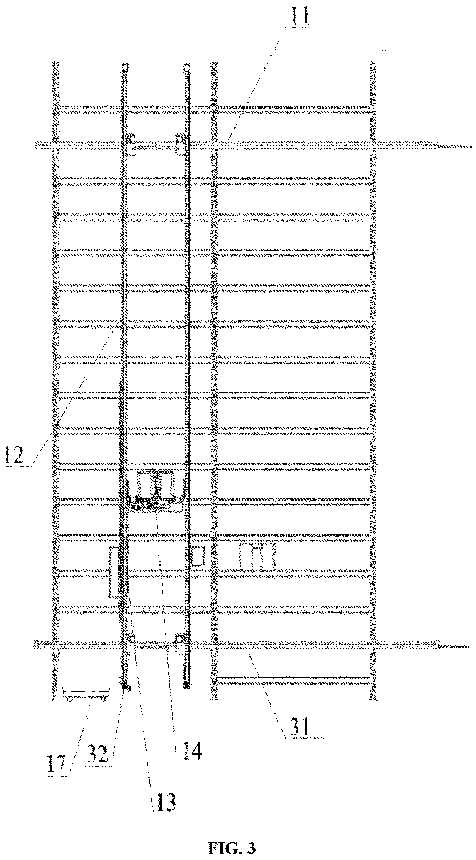

Referring to FIG. 3, a fixed rail conveying device for warehousing rack is shown. On the basis of the illustrations and the corresponding explanations of FIG. 1 and FIG. 2, in FIG. 3, another transverse rail 31 is fixed at the lower part of the warehousing rack 10, and both the transverse rail 11 and another transverse rail 31 can be connected with the first upright 12 and the second upright 21 through sliders.

The slider moves on the transverse rails driven by a roller, and the roller is driven by a motor.

In the present example, a stable rail conveying device is more required in a large-scale rack system. Therefore, upper and lower transverse rails are arranged on the rail assembly to fully fix the first upright 12 and the second upright 21, so that the tasks of taking out, putting back, docking and sorting of bins/goods can be carried out reliably.

It should be noted that, in the examples related to FIG. 1 to FIG. 3, the freight robot is a ground freight robot running on the ground at the bottom layer of the warehousing rack. As an achievable example, AGV can be chosen as the freight robot. AGV, that is, automated guided vehicle, is also commonly called AGV trolley; or AMR, that is, autonomous mobile robot is used.

Moreover, in order to be fully disclosed, the ground freight robot can be chosen as a freight robot in the disclosed text.

Optionally, the ground freight robot performs path planning under the control of the server, or performs autonomous path planning, and the ground freight robot is provided with a planar moving assembly and a docking assembly that supports pushing and pulling of bins. In order to improve the transportation efficiency, the ground freight robot can run directly on the ground where the warehousing rack is located, and can cooperate with the warehousing rack by removing the bottom partition plate. The bins are driven by the movable members to place the bins and/or goods to be stored or taken out into the docking assembly of the freight robot. The ground freight robot can be a freight robot or a sorting robot. The above cooperation makes it possible to complete the goods warehousing, the transfer of bins/goods and the sorting of bins/goods in the warehousing space.

As an achievable way, according to the similar principle, the movable member running on the slide rail of the upright can be realized by the way shown in the following illustration, a more specific electric control method, which is not limited and has no specific illustration herein.

A synchronous pulley, which is driven by a motor 41 and can be controlled by a reducer, drives a synchronous belt 42 to support the first movable member to move on the slide rail of the first upright; and
the synchronous pulley, which is driven by a motor and can be controlled by a reducer, drives a synchronous belt to support the second movable member to move on the slide rail of the second upright.

The above arrangement can not only accurately locate the position between the task module and the bin, but also greatly improve the utilization of warehousing space, the speed of goods in and out, and the sorting efficiency of the existing warehousing system.

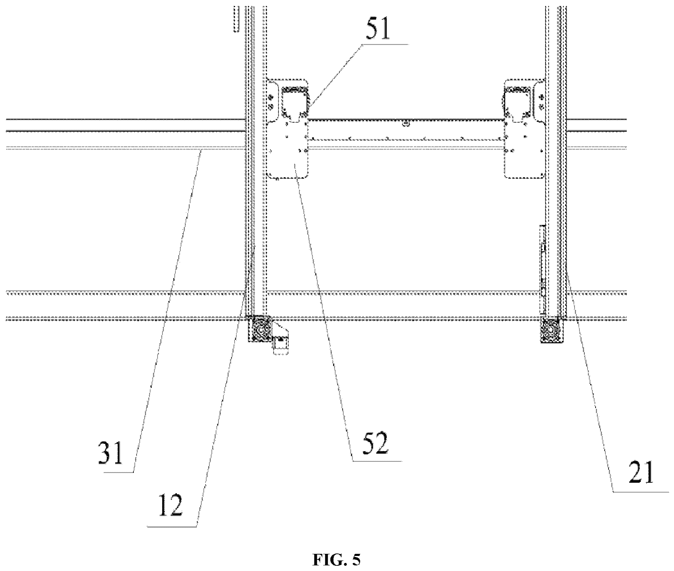

Referring to FIG. 5, a part of the fixed rail conveying device for warehousing rack is shown.

In the present example, the connecting structures between the transverse rail 11 and the first upright 12 and between the transverse rail 11 and the second upright 21 are shown in FIG. 5. Referring to FIG. 3, the slider 52 can be driven by the roller 51 to move on the transverse rail 31. The first upright 12 and the second upright 21 are sleeved on the fixed position of the slider 52, and the roller 51 contacts with the transverse rail 31 to realize the smooth movement.

The above arrangement can be one implementation, and the implementation is not limited thereto.

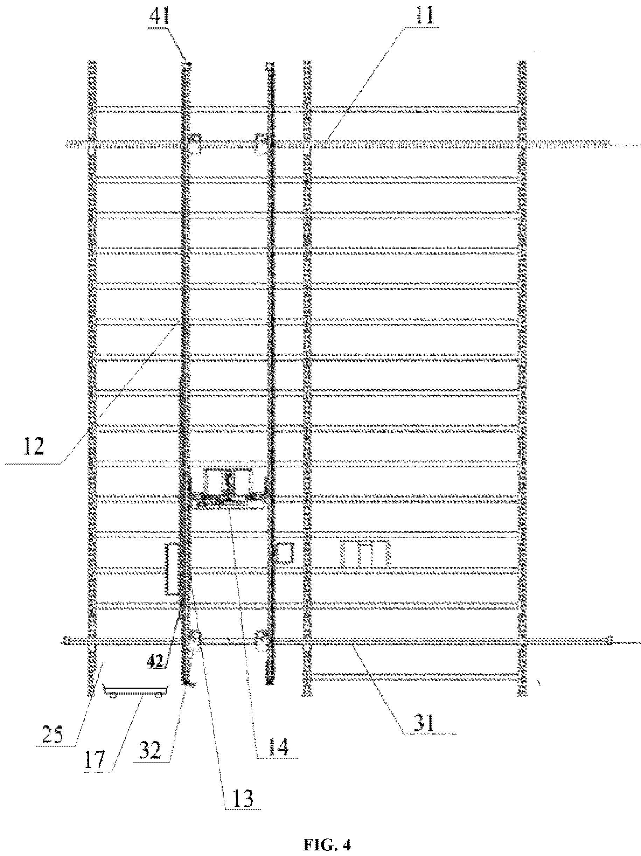

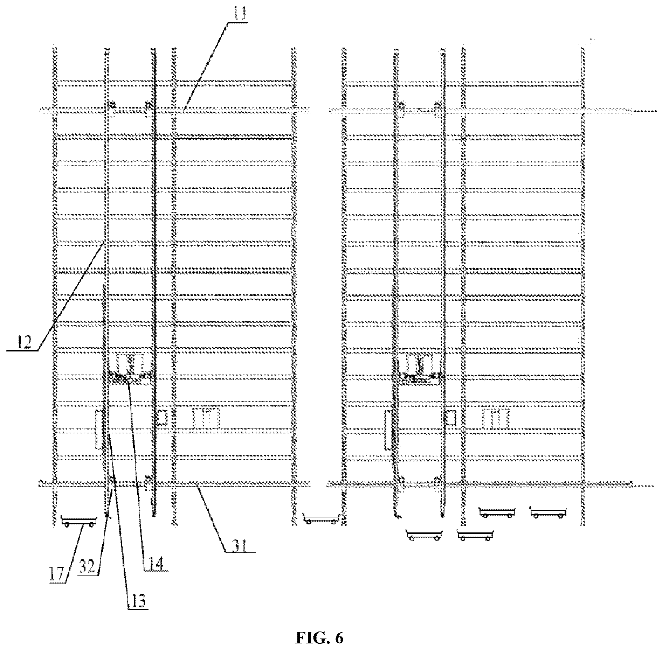

Referring to FIG. 6, a fixed rail conveying system for warehousing rack is shown, which includes one or more fixed rail conveying devices for warehousing rack according to FIG. 1 to FIG. 5. In a complete fixed rail conveying system for warehousing rack, the fixed rail conveying devices for warehousing rack can be installed on one or more warehousing racks, which can run independently under the instructions of the control chip and software, or run synergistically with the built-in warehouse management software on the server side.

### To sum up:

A fixed rail conveying device and the system thereof for warehousing rack are provided in the example of the present invention, wherein a transverse rail is arranged on the warehousing rack for the upright to move, and a movable member is arranged on the upright to drive a task module to perform actions such as identifying and storing or taking out bins. The device fundamentally solves the problem of waste of warehousing space in the existing warehousing system, and avoids the need for freight robots or sorting robots to maintain ultra-high counterweights or excessive requirements on the warehousing ground to perform actions such as warehousing transfer or warehousing sorting. More importantly, the bins can be driven by the movable member to store or take out the bins and/or goods, to place the bins and/or goods into the docking assembly of the freight robot running at the bottom of the rack, or to take the bins and/or goods out from the docking assembly. The bins/goods in the warehouse can be cooperated with the freight robot or the sorting robot, so as to make it possible for the goods warehousing, the transfer of bins/goods and the sorting of bins/goods to be accomplished in the warehousing space. It can greatly improve the utilization of warehousing space, the speed of goods in and out, and the sorting efficiency of the existing warehousing system.

Although the preferred examples of the present invention have been described, those skilled in the art can make additional changes and modifications to these examples once they learn the basic inventive concept. Therefore, the appended claims are intended to be interpreted as including the preferred examples and all changes and modifications falling within the scope of the present invention.

Obviously, a person skilled in the art can make various modifications and variations to the present invention without departing from the spirit and scope of the present invention. Thus, to the extent that these modifications and variations of the present invention are within the scope of the claims and their technical equivalents of the present invention, the present invention is intended to encompass those modifications and variations as well.

### Industrial Practicability

To sum up, the fixed rail conveying device and the system thereof for warehousing rack provided in the present invention greatly improve the utilization of warehousing space, the speed of goods in and out, and the sorting efficiency of the existing warehousing system.

## Claims

1. A fixed rail conveying device for a warehousing rack, **characterized by** comprising:
a transverse rail, a first upright, a first movable member and a connecting mechanism of a task module, wherein
the transverse rail is fixed on a rack;
the first upright is vertically arranged on the transverse rail and can slide transversely;
the first movable member is arranged on the first upright and can slide along the first upright,
the first movable member is provided with the connecting mechanism of the task module; and
the task module is driven by the first movable member to store or take out a bin and/or a goods, and place the bin and/or the goods into a docking assembly of a freight robot running at a bottom of the rack, or take the bin and/or the goods out from the docking assembly.

2. The fixed rail conveying device for the warehousing rack according to claim 1, further comprising: a second upright and a second movable member, wherein the second upright is vertically arranged on the transverse rail and can slide transversely;
the second movable member is arranged on the upright and can slide along the second upright,
the second movable member is provided with the connecting mechanism of the task module;
the task module is arranged between the first upright and the second upright through the connecting mechanism; and
the task module is driven to be located to a goods position or a docking position on the warehousing rack.

3. The fixed rail conveying device for the warehousing rack according to any one of claims 1-2, wherein the freight robot is a ground freight robot running on a ground at a bottom layer of the warehousing rack.

4. The fixed rail conveying device for the warehousing rack according to claim 3, wherein when the task module is a bin pushing-pulling module, the connecting mechanism of the task module comprises:
a supporting structure of the bin pushing-pulling module;
and
a conveying assembly for the bin pushing-pulling module.

5. The fixed rail conveying device for the warehousing rack according to any one of claims 2-4, comprising:
a synchronous pulley, wherein the synchronous pulley is driven by a motor and can be controlled by a reducer; and the synchronous pulley drives a synchronous belt to support the first movable member to move on a slide rail of the first upright; and
a synchronous pulley, wherein the synchronous pulley is driven by a motor and can be controlled by a reducer; and the synchronous pulley drives a synchronous belt to support the second movable member to move on a slide rail of the second upright.

6. The fixed rail conveying device for the warehousing rack according to any one of claims 1-5, further comprising:
another transverse rail, fixed at a lower part of the warehousing rack, wherein
two transverse rails are connected with the first upright and the second upright through a slider; and
the slider moves on the transverse rails driven by a roller, and the roller is driven by a motor.

7. The fixed rail conveying device for the warehousing rack according to any one of claims 3-6, wherein the ground freight robot performs a path planning under a control of a server, or performs an autonomous path planning, and the ground freight robot is provided with a planar moving assembly and the docking assembly that supports pushing and pulling of the bin.

8. The fixed rail conveying device for the warehousing rack according to any one of claims 2-9, further comprising:
removing a bottom partition plate of the warehousing rack to provide a matching height, thereby supporting a ground freight robot to run on the ground and perform a docking action.

9. The fixed rail conveying device for the warehousing rack according to any one of claims 1-8, wherein the freight robot is an AGV trolley.

10. The fixed rail conveying device for the warehousing rack according to any one of claims 1-8, wherein the freight robot is an autonomous mobile robot.

11. A fixed rail conveying system for a warehousing rack, **characterized by** comprising:
one fixed rail conveying device for the warehousing rack according to any one of claims 1-10.

12. A fixed rail conveying system for a warehousing rack, **characterized by** comprising:
multiple fixed rail conveying devices for the warehousing rack according to any one of claims 1-10.
